# EUROPEAN PATENT SPECIFICATION

(11) **EP 4 636 540 B1**
(45) Date of publication and mention of the grant of the patent: **25.11.2026**
(21) Application number: 23902605.7
(22) Date of filing: 08.12.2023
(51) Int. Cl.: G06F 3/01, G06V 40/20, G06Q 10/101, G06F 3/0346, H04L 67/131

(54) **USER BEHAVIOR RECORDING METHOD BASED ON AR DEVICE, AND AR DEVICE**
BENUTZERVERHALTENSAUFZEICHNUNGSVERFAHREN AUF BASIS EINER AR-VORRICHTUNG UND AR-VORRICHTUNG
PROCÉDÉ D'ENREGISTREMENT DE COMPORTEMENT D'UTILISATEUR BASÉ SUR UN DISPOSITIF AR, ET DISPOSITIF AR

(30) Priority: 13.12.2022 CN 202211606710
(43) Date of publication of application: 22.10.2025
(73) Proprietor: Hangzhou Lingban Technology Co., Ltd., Hangzhou, Zhejiang 310000 (CN)
(72) Inventor: XU, Degang, Hangzhou, Zhejiang 310000 (CN); YUAN, Feng, Hangzhou, Zhejiang 310000 (CN); WANG, Junjie, Hangzhou, Zhejiang 310000 (CN)
(74) Representative: Huang, Liwei
(86) International application number: PCT/CN2023/137486
(87) International publication number: WO 2024/125409

(56) References cited:
- WO-A1-2018/226448
- CN-A- 108 111 832
- CN-A- 108 427 499
- CN-A- 113 315 938
- CN-A- 116 149 469
- US-A1- 2020 261 799
- US-A1- 2020 278 783

## Description

### TECHNICAL FIELD

The present invention relates to the augmented reality (Augmented Reality, AR) field, and in particular, to a user behavior recording method based on an AR device and an AR device.

### BACKGROUND

With the popularization of AR devices, increasingly more users start to use the AR device, watch and/or create AR content by using the AR device, and interact with the AR content in various interaction manners provided by the AR device, and the user also needs to record, as a video, an interaction behavior of creating the AR content by the user for propagation and sharing.

However, in an existing user behavior recording solution of the AR device, a user behavior is recorded by recording a screen of a rendering picture of a current AR device of a recorder, and recorded content on the screen is saved as a video, to facilitate propagation on the Internet. In an existing video recording mode, a viewer can only play a recorded video on an AR device or another intelligent device, which lacks the sense of immersion and sense of participation from the perspective of the viewer and does not support re-creation. In addition, a high-definition recorded video requires a large storage capacity of the device, which is not conducive to storage and propagation.

WO 2018/226448 A1 discloses a method including receiving data defining user actions associated with an AR/VR space.

### SUMMARY

An objective of the present invention is to provide a new user behavior recording method based on an AR device and an AR device, to record an operation and posture data of a user for same content by establishing a unified coordinate system between a recorder and a viewer, so that the viewer can view a previous operation of the recorder in same content space, thereby improving the sense of immersion and the sense of participation; and in addition, storage costs are reduced, and propagation and re-creation are facilitated.

According to a first aspect of the present invention, a user behavior recording method based on an AR device is provided, including: establishing a recording space coordinate system in response to a recording start instruction on a first AR device; recording first user behavior data of the first AR device to form a first user behavior data packet, where the first user behavior data includes posture data of the first AR device and the first user operation data, and the first user behavior data is configured to change AR content displayed by the first AR device; associating the first user behavior data packet with the AR content to form a first AR content scenario data packet; and storing the first AR content scenario data packet in response to a recording end instruction.

According to a second aspect of the present invention, an AR device is provided and includes a camera, a processor, a memory, and an inertial measurement unit IMU. The memory stores a computer program, and when the computer program is executed by the processor, the AR device is caused to perform the following steps: establishing a recording space coordinate system in response to a recording start instruction on a first AR device; recording first user behavior data of the first AR device to form a first user behavior data packet, where the first user behavior data includes posture data of the first AR device and the first user operation data, and the first user behavior data is configured to change AR content displayed by the first AR device; associating the first user behavior data packet with the AR content to form a first AR content scenario data packet; and storing the first AR content scenario data packet in response to a recording end instruction.

In an implementation of one or more aspects of the present invention, a user may record a user behavior in small storage space by recording only user operation information and posture information of an AR device associated with AR content, and the user behavior may be edited or expanded by another user, thereby facilitating propagation and re-creation.

### BRIEF DESCRIPTION OF DRAWINGS

FIG. 1 shows an exemplary system architecture 100 of an embodiment of the present invention that is applied to a user behavior recording method.
FIG. 2 is a block flowchart of a user behavior recording method based on an AR device according to one or more embodiments of the present invention.
FIG. 3 is a schematic diagram of a perspective of a recorder according to one or more embodiments of the present invention.
FIG. 4 is a schematic diagram of perspectives of a recorder and a viewer according to one or more embodiments of the present invention.
FIG. 5 is a schematic block diagram of a user behavior recording method based on an AR device according to one or more embodiments of the present invention.
FIG. 6 is a schematic diagram of an AR device 600 according to one or more embodiments of the present invention.

### DETAILED DESCRIPTION OF THE EMBODIMENTS

To further describe a technical means and an effect that are used in the present invention to achieve a predetermined object of the present invention, a specific implementation, a structure, a feature, and an effect of a user behavior recording method based on an AR device and an AR device that are proposed according to the present invention are described in detail below with reference to the accompanying drawings and preferred embodiments.

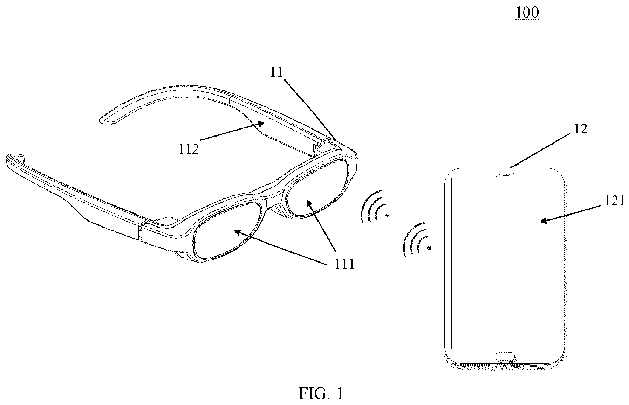

FIG. 1 shows an exemplary system architecture 100 of an embodiment of the present invention that is applied to a user behavior recording method.

As shown in FIG. 1, the exemplary system architecture 100 may include an AR device 11 and a target device 12.

The AR device 11 may include one or two display screens 111. The foregoing display screen is configured to display AR content. In addition, the AR device 11 further includes an eyeglass frame 112. In some embodiments, a sensor, a processing unit, a memory, and a battery of the AR device 11 may be placed inside the eyeglass frame 112. In some optional implementations of some embodiments, one or more of the sensor, the processing unit, the memory, and the battery may be integrated into another independent accessory (not shown), and connected to the eyeglass frame 112 through a data cable. In some optional implementations of some embodiments, the AR device 11 may have only a display function and some sensors, and provide capabilities such as data processing, data storage, and power supply by using the target device 12. In one or more embodiments of the present invention, the AR device 11 includes augmented reality or mixed reality (Mixed Reality, MR) devices such as AR glasses, mixed reality glasses, an AR headring, an MR headring, and the like that can display AR content.

The target device 12 may include a touch-sensitive display screen 121. In some embodiments, the AR device 11 and the target device 12 may communicate with each other through a wireless connection. In one or more embodiments of the present invention, the target device 12 may include a device that has a computing capability such as a smartphone, a mobile data terminal, a smart tablet computer, or a laptop computer. In some optional implementations of some embodiments, the AR device 11 and the target device 12 may also be connected by using a data cable (not shown), and the AR device 11 may be controlled by using an interaction capability (for example, a touchpad) provided by the target device 12.

It should be understood that a quantity of AR devices and a quantity of target devices in FIG. 1 are merely examples. According to implementation needs, there may be any proper quantity of AR devices and any proper quantity of target devices.

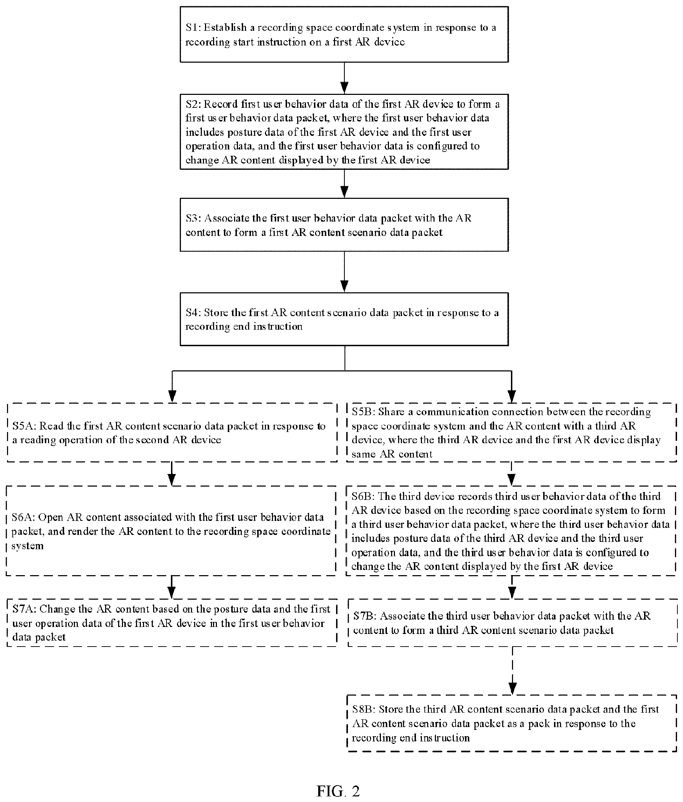

In a process in which a user uses the AR device 11 shown in FIG. 1, AR content may be viewed, edited, and created by using the AR device 11, where the AR content includes one of or a combination of a plurality of the following: a three-dimensional (three Dimensions, 3D) model, a picture, a video, and text, and a quantity of each type is not limited. In one embodiment, the AR content may be a combination of two 3D models, for example, may be a combination of a teacup and a teapot. In another embodiment, the AR content may be a combination of a 3D model and text, for example, the 3D model is a virtual character, and the text is a brief introduction to the virtual character. In some other embodiments, the AR content may be dynamic AR content or static AR content, where the dynamic AR content is AR content whose specific presentation manner continuously changes over time without any manual operation, and the static AR content is AR content whose specific presentation manner remains fixed without any manual operation. The user may perform various operations on the AR content based on the interaction capability provided by the AR device 11, for example, perform operations such as zooming in or out, rotating, moving closer or further, modifying or editing, adding elements to or deleting elements from, and attaching or detaching the AR content. For example, in one embodiment, the AR content is a white clothing model, and the user may draw a related pattern on the white clothing model. In this case, the AR content may need to be rotated and zoomed in or out, and a drawing tool provided by an AR content system is used to perform a drawing operation on the white clothing. In this case, the user may need to record a creation process of the user for sharing with others. Generally, the creation process of the user may be recorded in a video recording manner. However, this video recording manner may require large storage space, which is not conducive to propagation. Based on one or more embodiments of the present invention, the creation process of the user may be recorded by using a user behavior recording method, and may be viewed by another user on another device. As an example, a user behavior recording method based on an AR device is described in detail below based on FIG. 2 to FIG. 5.

FIG. 2 is a block flowchart of a user behavior recording method based on an AR device according to one or more embodiments of the present invention. The method includes the following steps:
S1: Establish a recording space coordinate system in response to a recording start instruction on a first AR device;
S2: Record first user behavior data of the first AR device to form a first user behavior data packet, where the first user behavior data includes posture data of the first AR device and the first user operation data, and the first user behavior data is configured to change AR content displayed by the first AR device;
S3: Associate the first user behavior data packet with the AR content to form a first AR content scenario data packet;
S4: Store the first AR content scenario data packet in response to a recording end instruction.

Specifically, a first user is wearing the first AR device, and the first user may view and edit one or more pieces of AR content by using the first AR device.

In step S1, according to one or more embodiments of the present invention, when the first user wishes to start behavior recording, behavior recording may be started by starting a recording key on the first AR device. In this case, the first AR device is initialized, and the recording space coordinate system is constructed. A purpose of constructing the recording space coordinate system is to enable all subsequent recorded user behaviors to be recorded based on a unified coordinate system, so that the user behaviors can be accurately reproduced. After the AR device starts recording, a user interface (User Interface, UI) may be displayed on the first AR device to notify the user that recording has started.

In one embodiment, an initial position of a three degrees of freedom (three Degrees of Freedom, 3DOF) sensor based on the first AR device may be used as an origin of coordinates of the recording space coordinate system. In one embodiment, the initial position of the 3DOF sensor is a physical position of the 3DOF sensor by default. The 3DOF sensor may include one of or a combination of a plurality of the following: an accelerometer, a gyroscope, and a magnetometer. The 3DOF sensor is configured to calculate 3DOF information of the first AR device. The 3DOF information includes pitch (Pitch), roll (Roll), and yaw (Yaw). Through the 3DOF information of the AR device, the user may set the AR content in 3DOF space, thereby implementing a function of extended display. The initial position of the 3DOF sensor is an origin position that is automatically defined when the 3DOF sensor is started, and is usually a physical position area of the 3DOF sensor. In another embodiment, based on superimposing of the 3DOF information, one or more cameras on the first AR device may be additionally used to perform simultaneous localization and mapping (Simultaneous Localization and Mapping, SLAM) modeling on current space to form SLAM space. In an embodiment of the present invention, the SLAM space additionally includes translation information along X, Y, and Z axes of the space in addition to the 3DOF information. An origin of coordinates based on the SLAM space is used as an origin of coordinates of the recording space coordinate system.

In step S2, after the first AR device starts recording, the first AR device records user behavior data of the first user on the AR device, and summarizes user behavior data in a recording process to form a data packet. The data packet may include all behaviors of performing operations for the AR content by the first user. In one or more embodiments, the user behavior data includes posture data collected by using a sensor on the AR device and other operation data, recorded on the AR device, of the user for the AR content. Based on a type of a sensor supported by the AR device, the posture data usually includes 3DOF data or 6DOF data. For example, if the AR device has only a 6-axis or 9-axis inertial measurement unit (Inertial Measurement Unit, IMU), the AR device can usually detect only 3DOF data. However, if the AR device is further equipped with one or more cameras that have a space perception capability, the AR device may detect translation of the user on the X, Y, and Z axes, so that 6DOF data can be obtained. Specifically, the posture data of the AR device includes translational data along X, Y, and Z and rotational data in terms of roll, pitch, and yaw. In one or more embodiments, the user operation data may include one or more of a gesture instruction, a voice instruction, and a key instruction of the user. For example, the gesture instruction may include a dynamic gesture and a static gesture, where the dynamic gesture may be an action such as opening a palm, making a fist, moving a finger, or moving a palm, and the static gesture may include a gesture such as a fist, a palm, a single finger, two fingers, three fingers, or four fingers. The voice instruction may be an offline voice instruction or an online voice instruction. For example, the user may enter operations such as "zoom in", "zoom out", and "rotate" through voice. The key instruction may be various operation keys on the AR device or a user instruction entered by another interaction device (for example, a mouse, Lark, or a keyboard). Through these user instructions, an operation such as zooming in, zooming out, rotating, moving, or editing may be performed on AR content displayed on the AR device, thereby changing a presentation effect of the AR content.

In step S3, the first user behavior data packet is associated with the AR content to form the first AR content scenario data packet. Specifically, the user behavior data packet generated in step S2 is associated with the AR content to form an AR content scenario data packet. In one embodiment, associating the user behavior data packet with the AR content may be: binding the AR content to the user behavior data packet, and a link statement pointing to a file address to the AR content may be added to the user behavior data packet, to open the AR content while the user opens the user behavior data packet. In another embodiment, associating the user behavior data packet with the AR content may be: combining the user behavior data packet with the AR content. When the user behavior data packet is being associated with the AR content, only an initial state of the AR content at a recording start moment may be associated, and a later state of the AR content may be reproduced based on data in the user behavior data packet. If the AR content includes one or more materials, the user behavior data packet may be associated with all materials of the AR content.

In step S4, the first AR content scenario data packet is stored in response to the recording end instruction. Specifically, when the user has completed recording and needs to end recording, the recording end instruction or a recording saving instruction may be provided by using a key, a gesture, or the like. First AR content scenario data in the first AR content scenario data packet may be stored as an independent file, so that the first AR content scenario data is subsequently read or edited by a same user or another user. A specific format of a storage file is not limited in one or more embodiments of the present invention, and only a format needs to be preset between AR devices and the AR devices support each other the format.

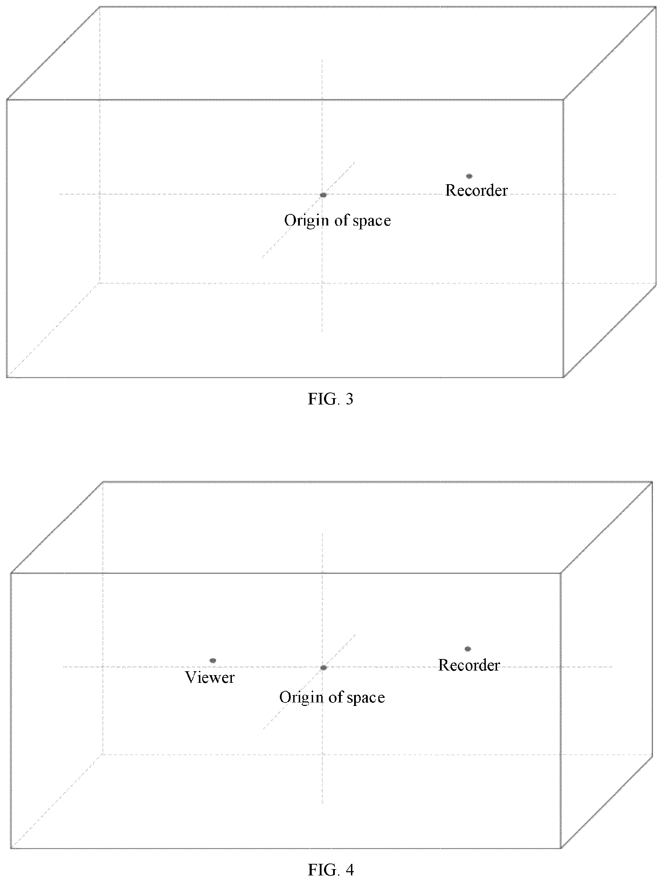

FIG. 3 is a schematic diagram of a perspective of a recorder according to one or more embodiments of the present invention. In FIG. 3, the recorder is the first user. After the recorder starts user behavior recording, the sensor generates a recording space coordinate system that includes a fixed space origin. All user behaviors of the recorder in the coordinate system are to be recorded by using the foregoing steps S1 to S4.

Because a behavior recording file that includes the AR content scenario data and that is recorded based on the foregoing steps S1 to S4 includes only user behavior data and basic AR content information and does not include a rendered picture, a file capacity is relatively small, and it can be convenient to perform propagation and sharing. For example, the recorder may share the file with another user through file transmission or a built-in sharing function, and the another user reads the file by using another AR device, so that the another user is able to reproduce the recorder's operation process on the AR content. A method for reading a user behavior file of a creator is described in steps S5A, S6A, and S7A in FIG. 2. S5A: Read the first AR content scenario data packet in response to a reading operation of the second AR device.

S6A: Open AR content associated with the first user behavior data packet, and render the AR content to the recording space coordinate system.

S7A: Change the AR content based on the first user operation data and the posture data of the first AR device in the first user behavior data packet.

Specifically, a second user is wearing the second AR device. The first AR device and the second AR device may be AR devices of a same type or may be AR devices of different types, provided that both the first AR device and the second AR device support reading of the storage file generated in step S4. In step S5A, when the second user wishes to view a user behavior recorded by the first user, the second user may use the second AR device to read the first AR content scenario data packet through reading the file. In step S6A, when the second AR device reads the first AR content scenario data packet, because it is detected that the first AR content scenario data packet has associated AR content, the second AR device may open the associated AR content, and render the AR content to the recording space coordinate system. In step S7A, the second AR device may adjust a presentation manner of the AR content based on operation information of the user for the first AR device and the posture data of the first AR device that are included in the first user behavior data packet. The second user may perform observation in the recording space. For example, the second user may view a creation process of the first user by adjusting an observation angle, or may view details or the whole of the AR content in a manner or approaching or moving away from the AR content.

FIG. 4 is a schematic diagram of perspectives of a recorder and a viewer according to one or more embodiments of the present invention. The recorder in FIG. 4 is the first user, and the viewer in FIG. 4 is the second user. In FIG. 4, the second user as the viewer and the first user as the recorder use a unified recording space coordinate system. The second user may move or make a turn in the space, so that a behavior of the first user in the space and adjustment made to the AR content may be observed from different angles and at different distances.

In addition to behavior recording performed by the first user on the AR content as described in steps S1 to S4, one or more embodiments of the present invention further disclose the following: a plurality of users may simultaneously create the AR content, and record behaviors of the plurality of users. Specifically, this is described in steps S5B, S6B, S7B, and S8B in FIG. 2.

S5B: Share a communication connection between the recording space coordinate system and the AR content with a third AR device, where the third AR device and the first AR device display same AR content.

S6B: The third device records third user behavior data of the third AR device based on the recording space coordinate system to form a third user behavior data packet, where the third user behavior data includes posture data of the third AR device and the third user operation data, and the third user behavior data is configured to change the AR content displayed by the first AR device.

S7B: Associate the third user behavior data packet with the AR content to form a third AR content scenario data packet.

S8B: Store the third AR content scenario data packet and the first AR content scenario data packet as a pack in response to the recording end instruction.

Specifically, a third user is wearing the third AR device. Through steps S5B to S8B, the third user and the first user may edit the same AR content together, and record a behavior of the first user and a behavior of the third user together. Specifically, in one embodiment, the third AR device may be communicatively connected to the first AR device in a wired or wireless manner, to obtain the AR content of the first AR device and display the AR content to the third user. The third AR device may record behavior data of the third user based on a recording space coordinate system that is the same as that created by the first AR device, and form the third user behavior data packet. Considering that both the first user and the third user may create the AR content at the same time, the first user behavior data packet and the third user behavior data packet are configured to change the AR content together. Therefore, the third AR content scenario data packet and the first AR content scenario data packet are stored as a pack, so that it is convenient for another user to observe operation behaviors of the first user and the third user at the same time.

In addition, one or more embodiments of the present invention further disclose a method for creating and recording the AR content by the second AR device after steps S5A to S7A. This method specifically includes: responding to a recording start instruction on the second AR device; recording second user behavior data of the second AR device based on the recording space coordinate system to form a second user behavior data packet, where the second user behavior data includes posture data of the second AR device and the second user operation data, and the second user behavior data is configured to change AR content displayed by the second AR device; associating the second user behavior data packet with the AR content to form a second AR content scenario data packet; and storing the second AR content scenario data packet and the first AR content scenario data packet as a pack in response to the recording end instruction.

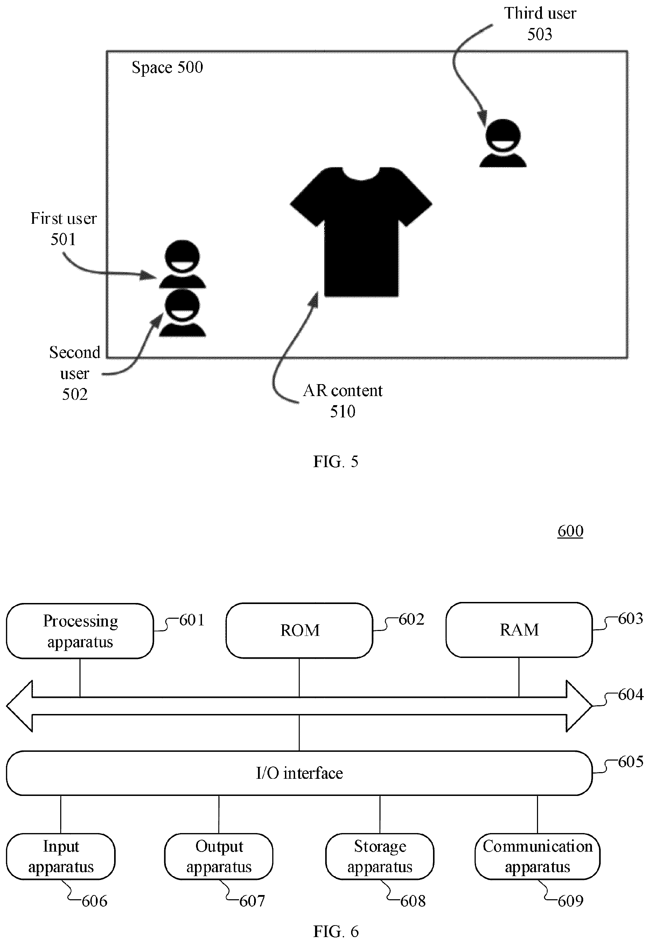

FIG. 5 is a schematic block diagram of a user behavior recording method based on an AR device according to one or more embodiments of the present invention. FIG. 5 includes a first user 501, a second user 502, and a third user 503 located in space 500, and AR content 510. As it is not shown in the figure, each user includes AR devices worn by the user, and the AR devices are respectively a first AR device, a second AR device, and a third AR device. The AR content 510 may be displayed on all these AR devices, but different users may see different portions of the AR content 510 due to different viewing angles of the users and different positions of the users in the coordinate system. The first user may perform steps such as S1 to S4, to record an operation performed by the first user on the AR content 510, so as to obtain the first AR content scenario data packet. The second user may open the first AR content scenario data packet based on steps S5A to S7A, so that a process in which the first user creates the AR content 510 may be viewed from a perspective of the second user. The third user may join in creation of the first user in a creation process of the first user, record a behavior of the third user of recording the AR content 510 as the third AR content scenario data packet, and store the third AR content scenario data packet and the first AR content scenario data packet together, to perform re-sharing.

In some extended embodiments, an encryption operation may be performed on the first AR content scenario data packet during storing of the first AR content scenario data packet, and a corresponding decryption operation needs to be completed when the first AR content scenario data packet is read, so as to play the user behavior. In one embodiment, the user of the recording behavior may add a payment module based on the AR content scenario data packet, and the AR content scenario data packet can be decrypted only after a viewer pays specific fees, thereby facilitating the creator to get a profit. In another embodiment, the user of the recording behavior may set that decryption may be performed only after a viewing user completes an action. In this way, interest in a sharing process is improved.

FIG. 6 below is a schematic structural diagram of an AR device 600 (for example, an intelligent terminal in FIG. 1) adapted to implement some embodiments of the present invention. The AR device shown in FIG. 6 is merely an example and should not impose any limitation on a functional and a scope of use of the embodiments of the present invention.

As shown in FIG. 6, an AR device 600 may include a processing apparatus 601 (such as a central processing unit or a graphics processing unit) that may perform various appropriate actions and processing based on a program stored in a read-only memory (Read-Only Memory, ROM) 602 or a program loaded from a storage apparatus 608 into a random access memory (Random Access Memory, RAM) 603. The RAM 603 further stores various programs and data required by an operation of the AR device 600. The processing apparatus 601, the ROM 602, and the RAM 603 are connected to each other through a bus 604. An input/output (Input/Output, I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (Liquid Crystal Display, LCD), a loudspeaker, and a vibrator; and a communication apparatus 609. The communication apparatus 609 may allow the AR device 600 to communicate with another device in a wireless or wired manner to exchange data. Although FIG. 6 shows the AR device 600 with various apparatuses, it should be understood that it is not required to implement or possess all the apparatuses shown. Alternatively, more or fewer apparatuses may be implemented or possessed. Each block shown in FIG. 6 may represent one apparatus, or may represent a plurality of apparatuses as required.

In particular, according to some embodiments of the present invention, the process described above with reference to the flowchart may be implemented as a computer software program. For example, some embodiments of the present invention include a computer program product that includes a computer program carried on a computer-readable medium, and the computer program includes program code used to perform the method shown in the flowchart. In some such embodiments, the computer program may be downloaded from a network by using the communication apparatus 609 and installed, or installed from the storage apparatus 608, or installed from the ROM 602. When the computer program is executed by the processing apparatus 601, the foregoing functions defined in the method in some embodiments of the present invention are performed.

It should be noted that the computer-readable medium described in some embodiments of the present invention may be a computer-readable signal medium, a computer-readable storage medium, or any combination of the two. For example, the computer-readable storage medium may be but is not limited to an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. More specific examples of the computer-readable storage medium may include but are not limited to the following: an electric connection with one or more wires, a portable computer disk, a hard disk, a random access memory (RAM), a read-only memory (ROM), an erasable programmable read-only memory (Erasable Programmable Read Only Memory, EPROM or flash memory), an optical fiber, a portable compact disc read-only memory (Compact Disc Read-Only Memory, CD-ROM), an optical storage component, a magnetic storage component, or any proper combination thereof. In some embodiments of the present invention, the computer-readable storage medium may be any tangible medium that includes or stores a program, and the program may be used by or in combination with an instruction execution system, apparatus, or component. In some embodiments of the present invention, the computer-readable signal medium may include a data signal propagated in a baseband or as a part of a carrier, and carries computer-readable program code. The data signal propagated in such a way can be in a plurality of forms, and includes but is not limited to an electromagnetic signal, an optical signal, or any proper combination thereof. The computer-readable signal medium may be alternatively any computer-readable medium other than the computer-readable storage medium, and the computer-readable signal medium may send, propagate, or transmit a program that is used by or in combination with an instruction execution system, apparatus, or component. The program code included in the computer-readable medium may be transmitted by using any proper medium, including but not limited to: a wire, an optical cable, a radio frequency (Radio Frequency, RF), or any proper combination of the foregoing mediums.

In some implementations, a client and a server may communicate with each other by using any currently known or future developed network protocol, such as the HyperText Transfer Protocol (HyperText Transfer Protocol, HTTP), and may be interconnected with any form or medium of digital data communication (for example, a communication network). Examples of the communication network include a local area network (Local Area Network, LAN), a wide area network (Wide Area Network, WAN), an internet work (for example, the Internet), an end-to-end network (for example, an ad hoc end-to-end network), and any currently known or future developed network.

The foregoing computer-readable medium may be included in the AR device, or may exist separately and is not assembled into the AR device. The computer-readable medium carries one or more programs. When the one or more programs are executed by the AR device, the AR device is enabled to perform the following operations: establishing a recording space coordinate system in response to a recording start instruction on a first AR device; recording first user behavior data of the first AR device to form a first user behavior data packet, where the first user behavior data includes posture data of the first AR device and the first user operation data, and the first user behavior data is configured to change AR content displayed by the first AR device; associating the first user behavior data packet with the AR content to form a first AR content scenario data packet; and storing the first AR content scenario data packet in response to a recording end instruction.

Computer program code for performing operations in some embodiments of the present invention may be written in one or more programming languages or a combination thereof, such as Java, Smalltalk, and C++, which further include conventional procedural programming languages such as the "C" language or similar programming languages. The program code may be completely executed on a user computer, partially executed on a user computer, executed as an independent software package, partially executed on a user computer and partially executed on a remote computer, or completely executed on a remote computer or a server. In a case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and the block diagrams in the accompanying drawings illustrate possible system architectures, functions, and operations of the system, the method, and the computer program product according to various embodiments of the present invention. In this regard, each block in the flowchart or the block diagram may represent a module, a program segment, or a part of code. The module, the program segment, or the part of the code includes one or more executable instructions used for implementing designated logic functions. It should also be noted that, in some implementations used as substitutes, functions annotated in blocks may alternatively occur in a sequence different from that annotated in the accompanying drawings. For example, two successively represented blocks may actually be performed basically in parallel, and sometimes the two blocks may be performed in a reverse sequence. This is determined by a related function. It should also be noted that each block in the block diagrams and/or the flowcharts, and a combination of the blocks in the block diagrams and/or the flowcharts may be implemented by a dedicated hardware-based system that executes specified functions or operations, or may be implemented by a combination of dedicated hardware and computer instructions.

The units described in some embodiments of the present invention may be implemented in a software manner, or may be implemented in a hardware manner.

The foregoing described functions in this specification may be performed at least in part by one or more hardware logic components. For example, without limitation, exemplary types of hardware logic components that may be used include: a field programmable gate array (Field Programmable Gate Array, FPGA), an application-specific integrated circuit (Application-Specific Integrated Circuit, ASIC), an application specific standard part (Application Specific Standard Parts, ASSP), a system on chip (System on Chip, SOC), a complex programmable logic device (Complex Programmable Logic Device, CPLD), and the like.

## Claims

1. A user behavior recording method based on an augmented reality AR device, comprising:
establishing a recording space coordinate system in response to a recording start instruction on a first AR device (S1);
recording first user behavior data of the first AR device to form a first user behavior data packet, wherein the first user behavior data comprises first user operation data, and the first user behavior data is configured to change AR content displayed by the first AR device (S2);
associating the first user behavior data packet with the AR content to form a first AR content scenario data packet (S3); and
storing the first AR content scenario data packet in response to a recording end instruction (S4);
**characterised in that** the first user behavior data further comprises posture data of the first AR device.

2. The user behavior recording method according to claim 1, wherein
an initial position of a three degrees of freedom 3DOF sensor based on the first AR device is used as an origin of coordinates of the recording space coordinate system.

3. The user behavior recording method according to claim 1, wherein
simultaneous localization and mapping SLAM modeling is performed on current space to form SLAM space; and
an origin of coordinates based on the SLAM space is used as an origin of coordinates of the recording space coordinate system.

4. The user behavior recording method according to claims 1 to 3, wherein the posture data of the first AR device comprises translational data along X, Y, and Z and rotational data in terms of roll, pitch, and yaw.

5. The user behavior recording method according to claims 1 to 3, wherein the user operation data comprises a user gesture instruction, a voice instruction, and a key instruction.

6. The user behavior recording method according to claims 1 to 3, wherein the AR content comprises one of or a combination of a plurality of the following: a three-dimensional 3D model, a picture, a video, and text.

7. The user behavior recording method according to claim 1, further comprising:
reading the first AR content scenario data packet in response to a reading operation of a second AR device (S5A);
opening AR content associated with the first user behavior data packet, and rendering the AR content to the recording space coordinate system (S6A); and
changing the AR content based on the first user operation data and the posture data of the first AR device in the first user behavior data packet (S7A).

8. The user behavior recording method according to claim 7, further comprising:
performing the following operations in response to a recording start instruction on the second AR device:
recording second user behavior data of the second AR device based on the recording space coordinate system to form a second user behavior data packet, wherein the second user behavior data comprises posture data of the second AR device and second user operation data, and the second user behavior data is configured to change AR content displayed by the second AR device;
associating the second user behavior data packet with the AR content to form a second AR content scenario data packet; and
storing the second AR content scenario data packet and the first AR content scenario data packet as a pack in response to the recording end instruction.

9. The user behavior recording method according to claim 1, further comprising:
sharing a communication connection between the recording space coordinate system and the AR content with a third AR device (S5B), wherein the third AR device and the first AR device display same AR content;
recording, by the third AR
device, third user behavior data of the third AR device based on the recording space coordinate system to form a third user behavior data packet, wherein the third user behavior data comprises posture data of the third AR device and third user operation data, and the third user behavior data is configured to change the AR content displayed by the first AR device (S6B);
associating the third user behavior data packet with the AR content to form a third AR content scenario data packet (S7B); and
storing the third AR content scenario data packet and the first AR content scenario data packet as a pack in response to the recording end instruction (S8B).

10. An augmented reality AR device (600), comprising a camera, a processor (601), a memory (602, 603), and an inertial measurement unit IMU, wherein the memory stores a computer program, and when the computer program is executed by the processor, the method according to claims 1 to 9 is implemented.

## Patentansprüche

1. Ein Benutzerverhaltensaufzeichnungsverfahren auf Basis einer Augmented-Reality-AR-Vorrichtung, umfassend:
Einrichten eines Aufzeichnungsraum-Koordinatensystems in Reaktion auf eine Aufzeichnungsstartanweisung auf einer ersten AR-Vorrichtung (S1);
Aufzeichnen erster Benutzerverhaltensdaten der ersten AR-Vorrichtung, um ein erstes Benutzerverhaltensdatenpaket zu bilden, wobei die ersten Benutzerverhaltensdaten erste Benutzeroperationsdaten umfassen, und die ersten Benutzerverhaltensdaten dazu konfiguriert sind, von der ersten AR-Vorrichtung angezeigten AR-Inhalt zu ändern (S2);
Assoziieren des ersten Benutzerverhaltensdatenpakets mit dem AR-Inhalt, um ein erstes AR-Inhaltsszenario-Datenpaket zu bilden (S3); und
Speichern des ersten AR-Inhaltsszenario-Datenpakets in Reaktion auf eine Aufzeichnungsendeanweisung (S4); **dadurch gekennzeichnet, dass** die ersten Benutzerverhaltensdaten ferner Posendaten der ersten AR-Vorrichtung umfassen.

2. Das Benutzerverhaltensaufzeichnungsverfahren nach Anspruch 1, wobei
eine Anfangsposition eines 3DOF-Sensors mit drei Freiheitsgraden auf Basis der ersten AR-Vorrichtung als ein Koordinatenursprung des Aufzeichnungsraum-Koordinatensystems verwendet wird.

3. Das Benutzerverhaltensaufzeichnungsverfahren nach Anspruch 1, wobei
eine SLAM-Modellierung zur simultanen Lokalisierung und Kartierung an einem aktuellen Raum durchgeführt wird, um einen SLAM-Raum zu bilden; und
ein Koordinatenursprung auf Basis des SLAM-Raums als ein Koordinatenursprung des Aufzeichnungsraum-Koordinatensystems verwendet wird.

4. Das Benutzerverhaltensaufzeichnungsverfahren nach einem der Ansprüche 1 bis 3, wobei die Posendaten der ersten AR-Vorrichtung Translationsdaten entlang X, Y und Z und Rotationsdaten hinsichtlich Roll-, Nick- und Gierwinkel umfassen.

5. Das Benutzerverhaltensaufzeichnungsverfahren nach einem der Ansprüche 1 bis 3, wobei die Benutzeroperationsdaten eine Benutzergestenanweisung, eine Sprachanweisung und eine Tastenanweisung umfassen.

6. Das Benutzerverhaltensaufzeichnungsverfahren nach einem der Ansprüche 1 bis 3, wobei der AR-Inhalt eines der folgenden Elemente oder eine Kombination einer Vielzahl der folgenden Elemente umfasst: ein dreidimensionales 3D-Modell, ein Bild, ein Video und Text.

7. Das Benutzerverhaltensaufzeichnungsverfahren nach Anspruch 1, ferner umfassend:
Lesen des ersten AR-Inhaltsszenario-Datenpakets in Reaktion auf einen Lesevorgang einer zweiten AR-Vorrichtung (S5A);
Öffnen des mit dem ersten Benutzerverhaltensdatenpaket assoziierten AR-Inhalts, und Rendern des AR-Inhalts in das Aufzeichnungsraum-Koordinatensystem (S6A); und
Ändern des AR-Inhalts auf Basis der ersten Benutzeroperationsdaten und der Posendaten der ersten AR-Vorrichtung in dem ersten Benutzerverhaltensdatenpaket (S7A).

8. Das Benutzerverhaltensaufzeichnungsverfahren nach Anspruch 7, ferner umfassend:
Durchführen der folgenden Operationen in Reaktion auf eine Aufzeichnungsstartanweisung auf der zweiten AR-Vorrichtung:
Aufzeichnen zweiter Benutzerverhaltensdaten der zweiten AR-Vorrichtung auf Basis des Aufzeichnungsraum-Koordinatensystems, um ein zweites Benutzerverhaltensdatenpaket zu bilden, wobei die zweiten Benutzerverhaltensdaten Posendaten der zweiten AR-Vorrichtung und
zweite Benutzeroperationsdaten umfassen, und die zweiten Benutzerverhaltensdaten dazu konfiguriert sind, von der zweiten AR-Vorrichtung angezeigten AR-Inhalt zu ändern;
Assoziieren des zweiten Benutzerverhaltensdatenpakets mit dem AR-Inhalt, um ein zweites AR-Inhaltsszenario-Datenpaket zu bilden; und
Speichern des zweiten AR-Inhaltsszenario-Datenpakets und des ersten AR-Inhaltsszenario-Datenpakets als ein Paket in Reaktion auf die Aufzeichnungsendeanweisung.

9. Das Benutzerverhaltensaufzeichnungsverfahren nach Anspruch 1, ferner umfassend:
Teilen einer Kommunikationsverbindung zwischen dem Aufzeichnungsraum-Koordinatensystem und dem AR-Inhalt mit einer dritten AR-Vorrichtung (S5B), wobei die dritte AR-Vorrichtung und die erste AR-Vorrichtung denselben AR-Inhalt anzeigen;
Aufzeichnen, durch die dritte AR-Vorrichtung, dritter Benutzerverhaltensdaten der dritten AR-Vorrichtung auf Basis des Aufzeichnungsraum-Koordinatensystems, um ein drittes Benutzerverhaltensdatenpaket zu bilden, wobei die dritten Benutzerverhaltensdaten Posendaten der dritten AR-Vorrichtung und dritte Benutzeroperationsdaten umfassen, und die dritten Benutzerverhaltensdaten dazu konfiguriert sind, den von der ersten AR-Vorrichtung angezeigten AR-Inhalt zu ändern (S6B);
Assoziieren des dritten Benutzerverhaltensdatenpakets mit dem AR-Inhalt, um ein drittes AR-Inhaltsszenario-Datenpaket zu bilden (S7B); und
Speichern des dritten AR-Inhaltsszenario-Datenpakets und des ersten AR-Inhaltsszenario-Datenpakets als ein Paket in Reaktion auf die Aufzeichnungsendeanweisung (S8B).

10. Eine Augmented-Reality-AR-Vorrichtung (600), umfassend eine Kamera, einen Prozessor (601), einen Speicher (602, 603) und eine inertiale Messeinheit IMU, wobei der Speicher ein Computerprogramm speichert und, wenn das Computerprogramm durch den Prozessor ausgeführt wird, das Verfahren nach einem der Ansprüche 1 bis 9 implementiert wird.

## Revendications

1. Un procédé d'enregistrement de comportement d'utilisateur basé sur un dispositif de réalité augmentée AR, comprenant :
l'établissement d'un système de coordonnées de l'espace d'enregistrement en réponse à une instruction de démarrage d'enregistrement sur un premier dispositif AR (S1) ;
l'enregistrement de premières données de comportement d'utilisateur du premier dispositif AR pour former un premier paquet de données de comportement d'utilisateur, dans lequel les premières données de comportement d'utilisateur comprennent des premières données d'opération d'utilisateur, et les premières données de comportement d'utilisateur sont configurées pour modifier un contenu AR affiché par le premier dispositif AR (S2) ;
l'association du premier paquet de données de comportement d'utilisateur avec le contenu AR pour former un premier paquet de données de scénario de contenu AR (S3) ; et
le stockage du premier paquet de données de scénario de contenu AR en réponse à une instruction de fin d'enregistrement (S4) ; **caractérisé en ce que** les premières données de comportement d'utilisateur comprennent en outre des données de pose du premier dispositif AR.

2. Le procédé d'enregistrement de comportement d'utilisateur selon la revendication 1, dans lequel une position initiale d'un capteur à trois degrés de liberté 3DOF sur la base du premier dispositif AR est utilisée comme une origine des coordonnées du système de coordonnées de l'espace d'enregistrement.

3. Le procédé d'enregistrement de comportement d'utilisateur selon la revendication 1, dans lequel une modélisation SLAM pour la localisation et cartographie simultanées est réalisée sur un espace actuel pour former un espace SLAM ; et
une origine des coordonnées sur la base de l'espace SLAM est utilisée comme une origine des coordonnées du système de coordonnées de l'espace d'enregistrement.

4. Le procédé d'enregistrement de comportement d'utilisateur selon l'une quelconque des revendications 1 à 3, dans lequel les données de pose du premier dispositif AR comprennent des données de translation selon X, Y et Z et des données de rotation en termes de roulis, tangage et lacet.

5. Le procédé d'enregistrement de comportement d'utilisateur selon l'une quelconque des revendications 1 à 3, dans lequel les données d'opération d'utilisateur comprennent une instruction gestuelle d'utilisateur, une instruction vocale et une instruction de touche.

6. Le procédé d'enregistrement de comportement d'utilisateur selon l'une quelconque des revendications 1 à 3, dans lequel le contenu AR comprend l'un des éléments suivants ou une combinaison d'une pluralité de ces éléments : un modèle tridimensionnel 3D, une image, une vidéo et du texte.

7. Le procédé d'enregistrement de comportement d'utilisateur selon la revendication 1, comprenant en outre :
la lecture du premier paquet de données de scénario de contenu AR en réponse à une opération de lecture d'un deuxième dispositif AR (S5A) ;
l'ouverture d'un contenu AR associé avec le premier paquet de données de comportement d'utilisateur, et le rendu du contenu AR dans le système de coordonnées de l'espace d'enregistrement (S6A) ; et
la modification du contenu AR sur la base des premières données d'opération d'utilisateur et des données de pose du premier dispositif AR dans le premier paquet de données de comportement d'utilisateur (S7A).

8. Le procédé d'enregistrement de comportement d'utilisateur selon la revendication 7, comprenant en outre :
la réalisation des opérations suivantes en réponse à une instruction de démarrage d'enregistrement sur le deuxième dispositif AR :
l'enregistrement de deuxièmes données de comportement d'utilisateur du deuxième dispositif AR sur la base du système de coordonnées de l'espace d'enregistrement pour former un deuxième paquet de données de comportement d'utilisateur, dans lequel les deuxièmes données de comportement d'utilisateur comprennent des données de pose du deuxième dispositif AR et des deuxièmes données d'opération d'utilisateur, et les deuxièmes données de comportement d'utilisateur sont configurées pour modifier un contenu AR affiché par le deuxième dispositif AR ;
l'association du deuxième paquet de données de comportement d'utilisateur avec le contenu AR pour former un deuxième paquet de données de scénario de contenu AR ; et
le stockage du deuxième paquet de données de scénario de contenu AR et du premier paquet de données de scénario de contenu AR sous forme d'un paquet en réponse à l'instruction de fin d'enregistrement.

9. Le procédé d'enregistrement de comportement d'utilisateur selon la revendication 1, comprenant en outre :
le partage d'une liaison de communication entre le système de coordonnées de l'espace d'enregistrement et le contenu AR avec un troisième dispositif AR (S5B), dans lequel le troisième dispositif AR et le premier dispositif AR affichent un même contenu AR ;
l'enregistrement, par le troisième dispositif AR, de troisièmes données de comportement d'utilisateur du troisième dispositif AR sur la base du système de coordonnées de l'espace d'enregistrement pour former un troisième paquet de données de comportement d'utilisateur, dans lequel les troisièmes données de comportement d'utilisateur comprennent des données de pose du troisième dispositif AR et des troisièmes données d'opération d'utilisateur, et les troisièmes données de comportement d'utilisateur sont configurées pour modifier le contenu AR affiché par le premier dispositif AR (S6B) ;
l'association du troisième paquet de données de comportement d'utilisateur avec le contenu AR pour former un troisième paquet de données de scénario de contenu AR (S7B) ; et
le stockage du troisième paquet de données de scénario de contenu AR et du premier paquet de données de scénario de contenu AR sous forme d'un paquet en réponse à l'instruction de fin d'enregistrement (S8B).

10. Un dispositif de réalité augmentée AR (600), comprenant une caméra, un processeur (601), une mémoire (602, 603) et une unité de mesure inertielle IMU, dans lequel la mémoire stocke un programme informatique, et lorsque le programme informatique est exécuté par le processeur, le procédé selon l'une quelconque des revendications 1 à 9 est mis en œuvre.
